# EUROPÄISCHE PATENTSCHRIFT

(11) **EP 1 954 957 B1**
(45) Veröffentlichungstag und Bekanntmachung des Hinweises auf die Patenterteilung: **08.10.2014**
(21) Anmeldenummer: 06828602.0
(22) Anmeldetag: 04.12.2006
(51) Int. Cl.: F16D 66/00

(54) **VORRICHTUNG ZUR DURCHGÄNGIGKEITSINSPEKTION VON DURCHGEHENDEN BELÜFTUNGSKANÄLEN EINER BREMSSCHEIBE**
DEVICE FOR CHECKING THE PENETRABILITY OF CONTINUOUS VENTILATION DUCTS OF A BRAKE DISK
DISPOSITIF DE CONTROLE DE COLMATAGE DE CANAUX DE VENTILATION TRAVERSANTS D'UN DISQUE DE FREIN

(30) Priorität: 02.12.2005 WO PCT/DE2005/002184
(43) Veröffentlichungstag der Anmeldung: 13.08.2008
(73) Patentinhaber: HOS Hottinger Systems GbR, 68219 Mannheim (DE)
(72) Erfinder: BEYERER, Jürgen, 69234 Dielheim (DE)
(74) Vertreter: Ullrich & Naumann
(86) Internationale Anmeldenummer: PCT/DE2006/002147
(87) Internationale Veröffentlichungsnummer: WO 2007/062645

(56) Entgegenhaltungen:
- EP-B1- 1 474 618
- GB-A- 1 597 564
- JP-A- 2004 204 899
- US-A- 6 025 909
- US-A1- 2003 174 320

## Beschreibung

Die vorliegende Erfindung betrifft eine Vorrichtung zur Durchgängigkeitsinspektion von durchgehenden Belüftungskanälen einer Bremsscheibe, wobei sich die Belüftungskanäle über den gesamten Umfang der Bremsscheibe verteilt vom äußeren Rand der Bremsscheibe in einen mittigen Durchgang (innenbelüftete Bremsscheibe) oder in einen um den mittigen Durchgang ausgebildeten, nach außen geöffneten Belüftungsring (außenbelüftete Bremsscheibe) erstrecken, mit einer Lichtquelle zum Durchleuchten der Belüftungskanäle und mit mindestens einer Kamera zur Aufnahme des durch die Belüftungskanäle hindurchtretenden Lichts.

Bremsscheiben werden üblicherweise gusstechnisch hergestellt. Problematisch sind dabei die Belüftungskanäle, die sich als radiale Kanäle vom äußeren Rand der Bremsscheibe entweder in einen mittigen Durchgang bei innenbelüfteten Bremsscheiben oder in einen um den mittigen Durchgang ausgebildeten, nach außen geöffneten Belüftungsring bei außenbelüfteten Bremsscheiben erstrecken. Nicht selten ist die Ausbildung der Belüftungskanäle nach gusstechnischer Herstellung insoweit mangelhaft, als eine oder gleich mehrere der Belüftungskanäle geschlossen oder nicht hinreichend durchgängig bzw. geöffnet sind. Eine hinreichende Kühlung im Betrieb der Bremsscheibe ist dann nicht gewährleistet.

Zum gattungsbildenden Stand der Technik wird die EP 1 474 618 B1 genannt. Aus dieser Druckschrift ist eine Vorrichtung zur Durchgängigkeitsinspektion der Belüftungskanäle einer Bremsscheibe bekannt, wobei dort die Belüftungskanäle gleichzeitig durchleuchtet werden. Entsprechend wird das durch die Belüftungskanäle hindurchtretende Licht von einer einzigen Kamera gleichzeitig aufgenommen, so dass mit der so entstehenden Aufnahme eine Beurteilung der Durchgängigkeit bzw. Qualität aller Belüftungskanäle möglich ist.

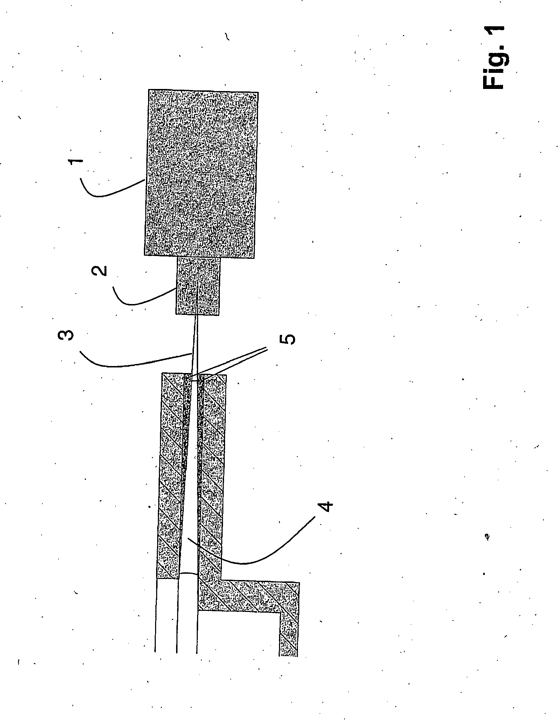

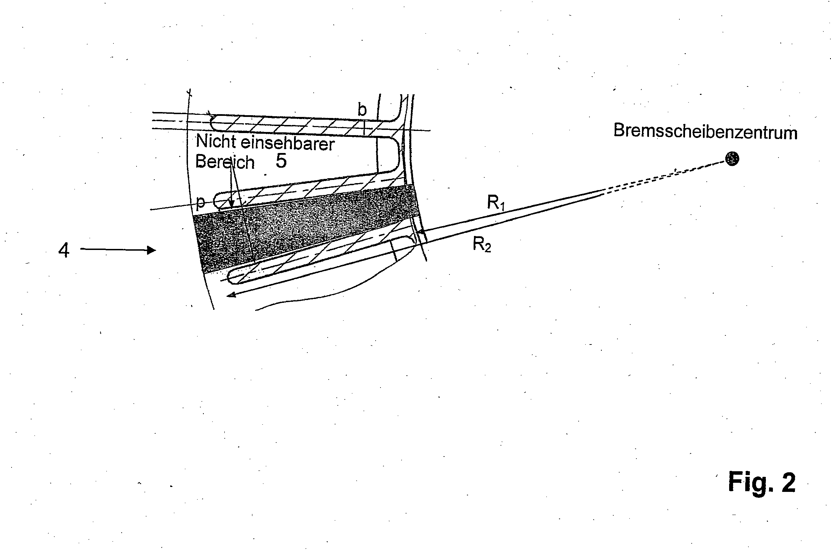

Die aus der EP 1 474 618 B1 bekannte Vorrichtung ist jedoch insoweit problematisch, als die regelmäßig zum Einsatz kommenden Zeilenkamerasysteme Standardobjektive verwenden. Damit lässt sich regelmäßig zwar ein großer Teil der Belüftungskanäle inspizieren. Aufgrund der geometrischen Gegebenheit der Belüftungskanäle und aufgrund des optischen Strahlengangs verbleibt jedoch ein zumindest geringer Teil des jeweiligen Belüftungskanals uneinsehbar, wie dies den prinzipiellen Darstellung aus den Fig. 1 und 2 zu entnehmen ist, die - jeweils für sich - unterschiedliche Typen der sich in der Praxis ergebenden Abschattungen zeigen.

In der den Stand der Technik darstellenden Fig. 1 ist die Kamera 1 mit einem konventionellen Objektiv 2 ausgestattet. Der Strahlengang 3 zeigt schematisch das aus dem Belüftungskanal 4 "beobachtete" Licht. Entsprechend verbleibt im Belüftungskanal 4 ein nicht einsehbarer Bereich 5, so dass gemäß Stand der Technik eine Inspektion der Belüftungskanäle 4 einer Bremsscheibe nur bedingt möglich ist.

Fig. 2 bezieht sich ebenfalls auf Stand der Technik und lässt in der Draufsicht den dort nicht einsehbaren Bereich 5 erkennen.

Aus der US 2003/0174320 A1 ist eine Inspektionsvorrichtung zur Überprüfung von Durchgängen mit wabenähnlicher Struktur bekannt, wobei dort die Durchgänge allesamt parallel zueinander verlaufen und insoweit recht einfach zu inspizieren sind. Dies steht im Gegensatz zu der Problematik bei einer Bremsscheibe, bei der dort vorgesehene Kanäle radial verlaufen und in Bezug auf die Inspektion ganz andere Probleme mit sich bringen.

Aus der GB 1 597 564 ist ebenfalls ein Inspektionssystem bekannt, wonach parallel zu einander verlaufende Durchgänge inspiziert werden. Eine wie auch immer geartete Abschattungsproblematik ist dieser Druckschrift fremd.

Aus der JP 2004 204 899 A ist für sich gesehen die Inspektion radial verlaufender Kanäle in einer Rotorscheibe bekannt, wobei es dort um den ungleichen Abstand zwischen den Kanälen geht.

Die EP 1 474 618 B1 zeigt eine Vorrichtung zur Durchgängigkeitsinspektion der Belüftungskanäle einer innenbelüftenden Bremsscheibe, wobei dort die Kamera Licht unter verschiedenen Winkeln aufnimmt, da sie das durch alle Lüftungskanäle durchdringende Licht gleichzeitig detektiert.

Der vorliegenden Erfindung liegt nun die Aufgabe zugrunde, eine Vorrichtung der gattungsbildenden Art, derart auszugestalten und weiterzubilden, dass mit einfachen Mitteln eine zuverlässige, schnelle und reproduzierbare Inspektion unter weitestgehendem Ausschluss nicht einsehbarer Bereiche möglich ist.

Die voranstehende Aufgabe wird durch die Merkmale der nebengeordneten Patentansprüche 1 und 3 gelöst. Danach ist eine gattungsbildende Vorrichtung dadurch gekennzeichnet, dass die Kamera mit einem telezentrischen Objektiv zur Aufnahme von im Wesentlichen parallelen Lichtstrahlen ausgestattet ist.

Erfindungsgemäß ist im Rahmen einer ersten Alternative erkannt worden, dass man das Problem nicht einsehbarer Bereiche unter Nutzung von Kameras mit telezentrischen Objektiven lösen kann. Dabei sei angemerkt, dass es hier in erster Linie um einen telezentrischen Strahlengang des optischen Systems geht, wonach sich das Objektiv bzw. die Kamera zur Aufnahme von im Wesentlichen parallelen Lichtstrahlen eignet. Insbesondere bei parallelen Innenwandungen der Belüftungskanäle sind entlang dieser Wandungen uneinsehbare Bereiche ausgeschlossen, wenn man ein telezentrisches Objektiv verwendet.

Es ist grundsätzlich von Vorteil, wenn bei Verwendung einer einzigen Kamera diese entlang der Wandung des Durchgangs bzw. entlang dem Steg zwischen zwei Durchgängen gekippt wird, um eine Abschattung bei der Bildaufnahme zu vermeiden. Dabei ist es denkbar, dass die Aufnahmen durch die Belüftungskanäle hindurch im Verlauf einer Umdrehung der Bremsscheibe unter dem gleichen Winkel erfolgen. Bei einer weiteren Umdrehung wird ein zweiter Winkel eingestellt, wobei Aufnahmen über mehrere Umdrehungen hinweg unter gleichen und unterschiedlichen Winkeln stattfinden können, und zwar unter Verwendung einer einzigen Kamera.

Zum telezentrischen Strahlengang ist grundsätzlich auszuführen, dass bei diesem die Eintritts- oder Austrittspupille oder beide durch spezielle optische Anordnung virtuell nach unendlich verlegt werden. Hierdurch werden gleichgroße Objekte unabhängig von ihrem Abstand immer gleichgroß abgebildet. Folglich bringt ein telezentrischer Strahlengang bei der hier zugrunde liegenden Problematik ganz besondere Vorteile und lässt sich beispielsweise durch Anordnung einer Blende im bild- oder objektseitigen Brennpunkt des Objektivs verwirklichen. Hierdurch verlaufen die Objekt- und/oder bildseitigen Hauptstrahlen parallel zur optischen Achse.

Alternativ lassen sich die Probleme uneinsehbarer Bereiche in den Belüftungskanälen dadurch lösen, dass mindestens zwei Kameras vorgesehen sind, die das Licht unter unterschiedlichen Winkeln, vorzugsweise entlang gegenüberliegenden Innenwandungen des Belüftungskanals, aufnehmen. Durch den Einsatz zweier oder mehrerer Kameras bzw. Kamerasysteme ergeben sich zwei wesentliche Vorteile. Zum einen lässt sich bei Bremsscheiben mit von außen nach innen verlaufenden Belüftungskanälen, beispielsweise mit radialen Belüftungskanälen (und ggf. geradlinigen Stegen) die Abschattungsproblematik beheben. Die Kameras schauen entlang gegenüberliegender Stegseiten bzw. entlang der Innenwandungen des Belüftungskanals. Eine Abschattung bzw. das Auftreten eines nicht einsehbaren Bereiches ist ausgeschlossen.

Zum anderen ergibt sich aus der Verwendung zweier oder mehrerer Kamerasysteme die grundsätzliche Möglichkeit, über entsprechend vorhandene und gegebenenfalls verstellbare Kamerasysteme auch Bremsscheiben mit schrägen bzw. spiralförmig verlaufenden Belüftungskanälen zu inspizieren. Insbesondere ist dies für sogenannte Noppenscheiben von besonderer Bedeutung, bei denen man beispielsweise gleichzeitig über drei Kamerasysteme in drei verschiedenen Fluchten während einer Umdrehung der Bremsschreibe unter unterschiedlichen Winkeln die Belüftungskanäle inspizieren kann.

Des Weiteren ist es möglich, die grundsätzlichen Ausgestaltungen - Verwendung von telezentrischen Objektiven und Nutzung mindestens zweier Kameras, wobei die unterschiedlichen Kameras unter unterschiedlichen Winkeln arbeiten - miteinander zu kombinieren, nämlich durch die Vorkehrung mindestens zweier Kameras mit telezentrischen Objektiven, wobei die zwei oder mehreren Kameras das Licht unter verschiedenen Winkeln, vorzugsweise entlang gegenüberliegender Innenwandungen des Belüftungskanals, aufnehmen.

Wesentlich ist jedenfalls, dass bei Verwendung von mehreren Kameras es möglich ist, in die wie auch immer gestalteten und verlaufenden Belüftungskanäle mit unterschiedlichen Fluchten, d.h. unter unterschiedlichen Winkeln, hineinzuschauen. Mit anderen Worten werden durch die verschiedenen Kameras die aus den Belüftungskanälen "sichtbaren" Lichtstrahlen unterschiedlich fluchtend, d.h. unter unterschiedlichen Winkeln, aufgenommen.

Insbesondere in Bezug auf eine automatische Inspektion ist es von weiterem Vorteil, wenn die Bremsschreibe während der Inspektion gedreht wird, so dass die unterschiedlichen Belüftungskanäle an der Kamera oder an den Kameras vorbei gedreht werden. An dieser Stelle sei angemerkt, dass es auf eine Relativbewegung zwischen der Bremsscheibe und den Kameras ankommt. Insoweit ist es möglich, dass die Bremsscheibe und/oder die Kameras relativ zueinander gedreht werden.

Eine Drehung beispielsweise der Bremsschreibe um 360°, oder eine mehrmalige Drehung der Bremsscheibe ist von Vorteil, um nämlich die Inspektion in Bezug auf das Ergebnis sicher zu gestalten.

Grundsätzlich ist es denkbar, die Bremsschreibe und/oder die Kameras bzw. Kamerasysteme zu drehen. So ist es denkbar, die Kameras bzw. Kamerasystem auf einer Kreisbahn um die Bremsschreibe herum zu bewegen, nämlich in einer Position, in der die Kameras exakt, gegebenenfalls unter unterschiedlichen Winkeln, in die Belüftungskanäle hineinschauen kann/können.

Des Weiteren ist es denkbar, dass zwei der Kameras einander gegenüberliegend am jeweils äußeren Rand der Bremsscheibe angeordnet sind. Eine beliebige Verteilung der Kameras mit den jeweiligen optischen Systemen ist denkbar, wobei es grundsätzlich möglich ist, die Kameras nebeneinander um den äußeren Rand der Bremsschreibe anzuordnen, gegebenenfalls mit unterschiedlicher Ausrichtung und unter Nutzung telezentrischer Objektive.

Von weiterem Vorteil ist es, wenn die verwendeten Objektive eine hohe Tiefenschärfe aufweisen. Insoweit ist es weiter vorteilhaft, wenn die Objektive in etwa auf die Mitte der Belüftungskanäle fokussiert werden, und zwar unter Nutzung der hohen Tiefenschärfe, so dass insgesamt ein scharfes Bild entsteht. Des Weiteren ist es denkbar, dass man den Fokus über die gesamte Länge des Belüftungskanals hinweg - je nach Bedarf - variiert.

Es gibt nun verschiedene Möglichkeiten, die Lehre der vorliegenden Erfindung auszugestalten und weiterzubilden. Dazu sei einerseits auf die dem Patentanspruch 1 nachgeordneten abhängigen Patentansprüche und andererseits auf die Ausführungen der bevorzugten Ausführungsbeispiele der Erfindung anhand der Zeichnung verwiesen. In der Zeichnung zeigt
- Fig. 1: in einer schematischen Ansicht eine aus dem Stand der Technik bekannte Anordnung zur Durchgängigkeitsinspektion der Belüftungskanäle einer Bremsscheibe,
- Fig. 2: eine Anordnung aus dem Stand der Technik, ähnlich der Anordnung aus Fig. 1 in einer Draufsicht,
- Fig. 3: in einer schematischen Seitenansicht eine erfindungsgemäße Vorrichtung zur Durchgängigkeitsinspektion der Belüftungskanäle einer Bremsscheibe, wobei dort ein telezentrisches Objektiv verwendet wird,
- Fig. 4: in einer schematischen Draufsicht ein weiteres Ausführungsbeispiel einer erfindungsgemäßen Vorrichtung, wobei dort zwei Kameras entlang der sich gegenüberliegenden Stegseiten der Belüftungskanäle detektieren und
- Fig. 5: in einer schematischen Ansicht die Darstellung eines besonderen Problems bei der Inspektion spiralförmig verlaufender Belüftungskanäle, wobei die uneinsehbaren Bereiche durch die Vorkehrung von drei Kamerasystemen mit unterschiedlich fluchtender Optik minimierbar sind.

Entsprechend den Ausführungen in der Beschreibungseinleitung zeigt Fig. 1 den Stand der Technik bei der Durchgängigkeitsinspektion der Belüftungskanäle einer Bremsscheibe, wonach nicht einsehbare Bereiche hinzunehmen sind. Die Kamera 1 ist dort mit einem herkömmlichen Objektiv 2 ausgestattet, so dass aufgrund des sich ergebenen Strahlengangs 3 der Belüftungskanal 4 mit Ausnahme eines nicht einsehbaren Bereichs 5 inspizierbar ist. Gerade in diesem Bereich können sich Materialreste befinden, die eine hinreichend gute Belüftung der Bremsschreibe verhindern.

Fig. 2 zeigt eine ähnliche Situation in einer schematischen Draufsicht, wobei auch dort die nicht einsehbaren Bereiche 5 dargestellt sind.

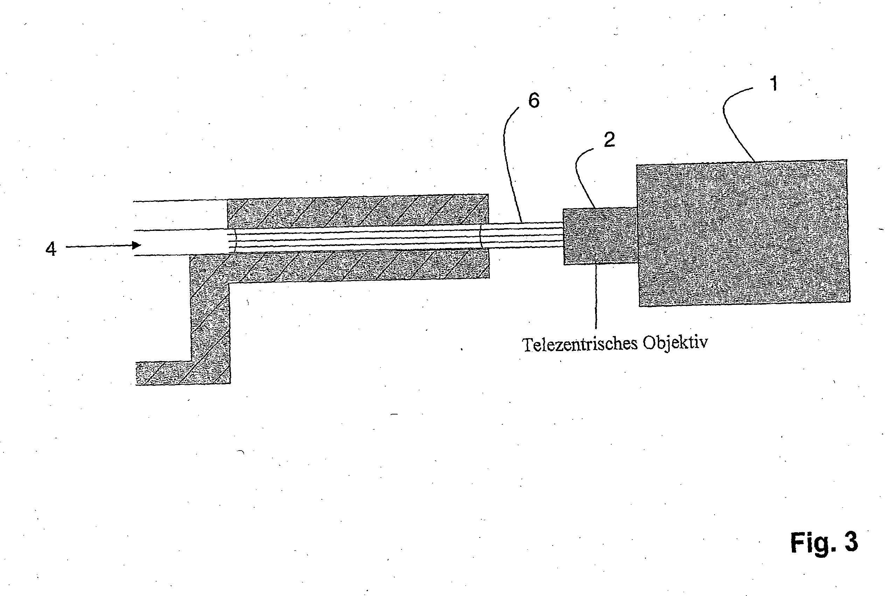

Fig. 3 zeigt in einer schematischen Ansicht ein erstes Ausführungsbeispiel einer erfindungsgemäßen Vorrichtung, wobei die Kamera 1 mit einem telezentrischen Objektiv 2 ausgestattet ist. Der dort gezeigte Strahlengang 6 in das telezentrische Objektiv 2 hinein verläuft parallel, so dass eine Abschattung bzw. nicht einsehbare Bereiche ausgeschlossen sind.

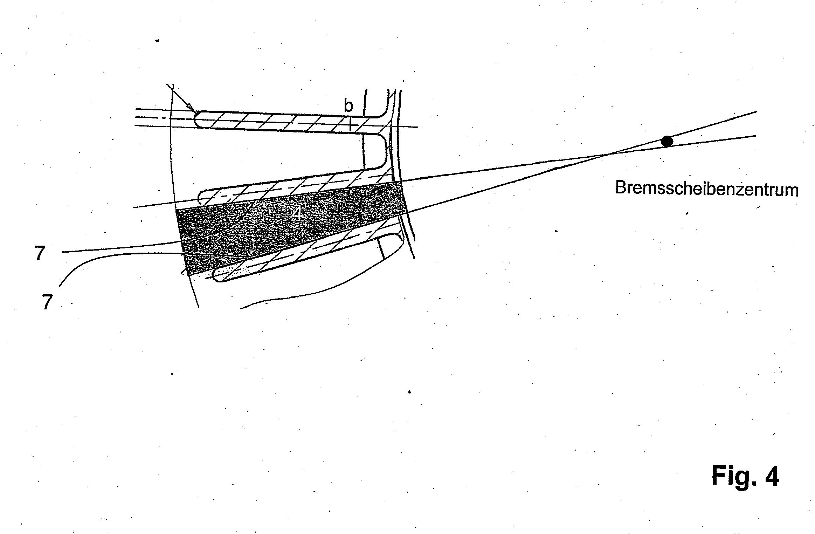

Fig. 4 zeigt in ebenfalls prinzipieller Darstellung eine alternative Vorrichtung unter Nutzung von zwei Kamerasystemen bzw. Kameras, wobei die Strahlengänge der beiden Kameras so ausgerichtet sind, dass die Kameras entlang den Innenwandungen 7 der Belüftungskanäle 4 schauen. Auch durch diese Maßnahme sind nicht einsehbare Bereiche bei einfacher Geometrie der Belüftungskanäle 4 ausgeschlossen.

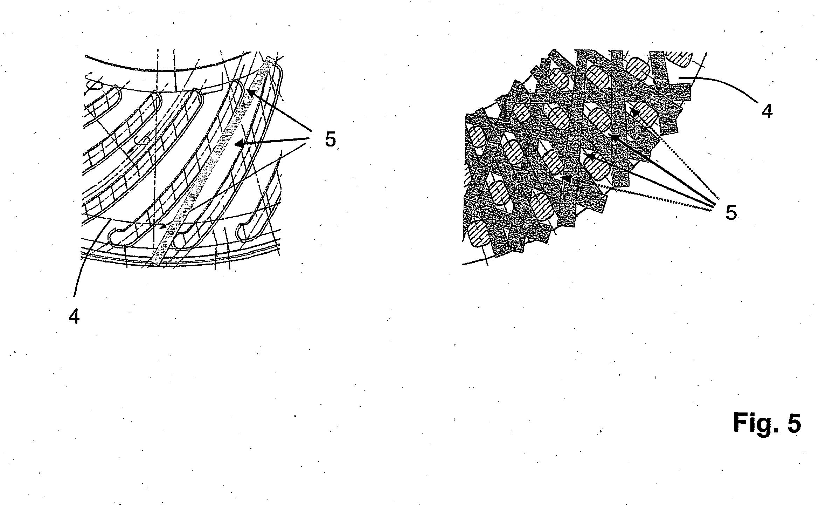

Fig. 5 zeigt in der linken Darstellung ein besonderes Problem bei sogenannten Noppenscheiben bzw. bei Bremsscheiben mit gedrehten oder spiralförmig verlaufenden Belüftungskanälen 4. Die linke Darstellung zeigt die dort auftretenden uneinsehbaren Bereiche 5, nämlich unter Nutzung einer Kamera entweder mit konventioneller Optik oder mit telezentrischer Optik.

Die rechte Darstellung in Fig. 5 zeigt die Nutzung von insgesamt drei Kameras, deren optische Achse verschieden fluchten. So lässt sich während einer Umdrehung der Bremsschreibe eine Inspektion solcher Belüftungskanäle 4 durchführen, wenngleich uneinsehbare Bereiche, jedoch gegenüber dem Stand der Technik stark reduziert, verbleiben.

In Bezug auf Merkmale, die sich den Figuren nicht entnehmen lassen, sei zu Vermeidung von Wiederholungen auf den allgemeinen Teil der Beschreibung und auf die Patentansprüche verwiesen.

Abschließend sei angemerkt, dass die voranstehend erörterten Ausführungsbeispiele lediglich der beispielhaften Erörterung der beanspruchten Lehre dienen, diese jedoch nicht auf die Ausführungsbeispiele einschränken.

## Patentansprüche

1. Vorrichtung zur Durchgängigkeitsinspektion von durchgehenden Belüftungskanälen (4) einer Bremsscheibe, wobei sich die Belüftungskanäle (4) über den gesamten Umfang der Bremsscheibe verteilt vom äußeren Rand der Bremsscheibe in einen mittigen Durchgang (innenbelüftete Bremsscheibe) oder in einen um den mittigen Durchgang ausgebildeten, nach außen geöffneten Belüftungsring (außenbelüftete Bremsscheibe) erstrecken, mit einer Lichtquelle zum Durchleuchten der Belüftungskanäle (4) und mit mindestens einer Kamera (1) zur Aufnahme des durch die Belüftungskanäle (4) hindurchtretenden Lichts,
**dadurch gekennzeichnet, dass** die Kamera (1) mit einem telezentrischen Objektiv (2) zur Aufnahme von im Wesentlichen parallelen Lichtstrahlen (6) ausgestattet ist.

2. Vorrichtung nach Anspruch 1, **dadurch gekennzeichnet, dass** mindestens zwei Kameras (1) vorgesehen sind, die das Licht unter verschiedenen Winkeln, vorzugsweise entlang gegenüberliegender Innenwandungen des Belüftungskanals (7), aufnehmen.

3. Vorrichtung zur Durchgängigkeitsinspektion von durchgehenden Belüftungskanälen (4) einer Bremsscheibe, wobei sich die Belüftungskanäle (4) über den gesamten Umfang der Bremsscheibe verteilt vom äußeren Rand der Bremsscheibe in einen mittigen Durchgang (innenbelüftete Bremsscheibe) oder in einen um den mittigen Durchgang ausgebildeten, nach außen geöffneten Belüftungsring (außenbelüftete Bremsscheibe) erstrecken, mit einer Lichtquelle zum Durchleuchten der Belüftungskanäle (4) und mit mindestens einer Kamera (1) zur Aufnahme des durch die Belüftungskanäle (4) hindurchtretenden Lichts, insbesondere nach Anspruch 1 oder 2,
**dadurch gekennzeichnet, dass** zwei oder mehrere Kameras (1) vorgesehen sind, die das Licht unter verschiedenen Winkeln, vorzugsweise entlang gegenüberliegender Innenwandungen des Belüftungskanals (7), aufnehmen.

4. Vorrichtung nach Anspruch 3, **dadurch gekennzeichnet, dass** die Kameras (1) mit telezentrischen Objektiven (2) zur Aufnahme von im Wesentlichen parallelen Lichtstrahlen (6) ausgestattet sind.

5. Vorrichtung nach einem der Ansprüche 1 bis 4, **dadurch gekennzeichnet, dass** drei oder mehr Kameras (1) vorgesehen sind, die unter verschiedenen Winkeln, d.h. mit unterschiedlichen Fluchten, die Lichtstrahlen aus den Belüftungskanälen (4) aufnehmen.

6. Vorrichtung nach einem der Ansprüche 2 bis 5, **dadurch gekennzeichnet, dass** während der Inspektion eine Relativbewegung zwischen der Bremsscheibe und den Kameras (1) stattfindet, wobei
die Bremsschreibe während der Inspektion drehbar ist.

7. Vorrichtung nach Anspruch 6, **dadurch gekennzeichnet, dass** die Bremsscheibe um 180°, um 360° oder endlos drehbar ist.

8. Vorrichtung nach einem der Ansprüche 2 bis 7, **dadurch gekennzeichnet, dass** die Kameras (1) nebeneinander um den äußeren Rand der Bremsscheibe angeordnet sind.

9. Vorrichtung nach einem der Ansprüche 2 bis 8, **dadurch gekennzeichnet, dass** zwei der Kameras (1) einander gegenüberliegend am äußeren Rand der Bremsscheibe angeordnet sind, wobei die beiden Kameras oder die Bremsschreibe vorzugsweise um 180° oder um 360° oder endlos dreht.

10. Vorrichtung nach einem der Ansprüche 4 oder 5-9, wenn rückbezogen auf Anspruch 4, **dadurch gekennzeichnet, dass** die Objektive (2) eine hohe Tiefenschärfe haben und/oder
dass die Objektive (2) in etwa auf die Mitte der Belüftungskanäle (4) fokussiert werden.

## Claims

1. Device for inspecting the continuity of continuous ventilation ducts (4) of a brake disc, wherein the ventilation ducts (4), distributed over the entire periphery of the brake disc, extend from the outside edge of the brake disc into a central passage (internally ventilated brake disc) or into a ventilation ring which is formed around the central passage and is open to the outside (externally ventilated brake disc), having a light source for shining light through the ventilation ducts (4) and having at least one camera (1) for recording the light that passes through the ventilation ducts (4), **characterised in that** the camera (1) is equipped with a telecentric lens (2) for recording substantially parallel light beams (6).

2. Device according to claim 1, **characterised in that** there are provided at least two cameras (1) which record the light at different angles, preferably along opposite inside walls of the ventilation duct (7).

3. Device for inspecting the continuity of continuous ventilation ducts (4) of a brake disc, wherein the ventilation ducts (4), distributed over the entire periphery of the brake disc, extend from the outside edge of the brake disc into a central passage (internally ventilated brake disc) or into a ventilation ring which is formed around the central passage and is open to the outside (externally ventilated brake disc), having a light source for shining light through the ventilation ducts (4) and having at least one camera (1) for recording the light that passes through the ventilation ducts (4), in particular according to claim 1 or 2,
**characterised in that** there are provided two or more cameras (1) which record the light at different angles, preferably along opposite inside walls of the ventilation duct (7).

4. Device according to claim 3, **characterised in that** the cameras (1) are equipped with telecentric lenses (2) for recording substantially parallel light beams (6),

5. Device according to any one of claims 1 to 4, **characterised in that** there are provided three or more cameras (1) which record the light beams from the ventilation ducts (4) at different angles, that is to say with different alignments.

6. Device according to any one of claims 2 to 5, **characterised in that** a relative movement between the brake disc and the cameras (1) takes place during the inspection, wherein
the brake disc is rotatable during the inspection.

7. Device according to claim 6, **characterised in that** the brake disc is rotatable through 180°, through 360° or infinitely.

8. Device according to any one of claims 2 to 7, **characterised in that** the cameras (1) are arranged next to one another around the outside edge of the brake disc.

9. Device according to any one of claims 2 to 8, **characterised in that** two of the cameras (1) are arranged opposite one another on the outside edge of the brake disc, the two cameras or the brake disc preferably rotating through 180° or through 360° or infinitely.

10. Device according to any one of claims 4 or 5 to 9 when dependent on claim 4, **characterised in that** the lenses (2) have a high depth of focus and/or
**in that** the lenses (2) are focused approximately at the middle of the ventilation ducts (4).

## Revendications

1. Dispositif permettant de contrôler la non-obstruction des conduits de ventilation (4) débouchants d'un disque de frein, lesdits conduits de ventilation (4), répartis sur tout le pourtour du disque de frein, s'étendant depuis le bord extérieur du disque de frein vers une percée centrale (disque de frein à ventilation intérieure) ou vers un anneau de ventilation (disque de frein à ventilation extérieure) ouvert vers l'extérieur, réalisé autour de à percée centrale, comportant une source de lumière pour éclairer l'intérieur des conduits de ventilation (4) et comportant au moins une caméra (1) permettant d'enregistrer la lumière passant au travers des conduits de ventilation (4),
**caractérisé en ce que** la caméra (1) est équipée d'un objectif (2) télécentrique permettant d'enregistrer des rayons lumineux (6) sensiblement parallèles.

2. Dispositif selon la revendication 1, **caractérisé en ce qu'**il est prévu au moins deux caméras (1) qui enregistrent la lumière sous des angles différents, de préférence le long des parois intérieures opposées du conduit de ventilation (7).

3. Dispositif permettant de contrôler la non-obstruction des conduits de ventilation (4) débouchants d'un disque de frein, lesdits conduits de ventilation (4), répartis sur tout le pourtour du disque de frein, s'étendant depuis le bord extérieur du disque de frein vers une percée centrale (disque de frein à ventilation intérieure) ou vers un anneau de ventilation (disque de frein à ventilation extérieure) ouvert vers l'extérieur, réalisé autour de la percée centrale, comportant une source de lumière pour éclairer l'intérieur des conduits de ventilation (4) et comportant au moins une caméra (1) permettant d'enregistrer la lumière passant au travers des conduits de ventilation (4), en particulier selon la revendication 1 ou 2,
**caractérisé en ce qu'**il est prévu deux ou plusieurs caméras (1), qui enregistrent la lumière sous des angles différents, de préférence le long des parois intérieures opposées du conduit de ventilation (7).

4. Dispositif selon la revendication 3, **caractérisé en ce que** les caméras (1) sont équipées d'objectifs (2) télécentriques permettant d'enregistrer des rayons lumineux (6) sensiblement parallèles.

5. Dispositif selon l'une quelconque des revendications 1 à 4, **caractérisé en ce qu'**il est prévu trois caméras (1) ou plus, qui enregistrent sous des angles différents, c'est-à-dire avec des alignements différents, les rayons lumineux sortant des conduits de ventilation (4).

6. Dispositif selon l'une quelconque des revendications 2 à 5, **caractérisé en ce que** pendant le contrôle, il se produit un mouvement relatif entre le disque de frein et les caméras (1), le disque de frein étant apte à tourner pendant le contrôle.

7. Dispositif selon la revendication 6, **caractérisé en ce que** le disque de frein est apte à tourner sur 180°, sur 360° ou en continu.

8. Dispositif selon l'une quelconque des revendications 2 à 7, **caractérisé en ce que** les caméras (1) sont disposées côte à côte autour du bord extérieur du disque de frein.

9. Dispositif selon l'une quelconque des revendications 2 à 8, **caractérisé en ce que** deux des caméras (1) sont disposées face à face sur le bord extérieur du disque de frein, lesdites deux caméras ou le disque de frein tournant de préférence sur 180° ou sur 360° ou en continu.

10. Dispositif selon la revendication 4 ou les revendications 5 à 9, si elles se réfèrent à la revendication 4, **caractérisé en ce que** les objectifs (2) ont une grande profondeur de champ et/ou **en ce que** les objectifs (2) sont focalisés sensiblement sur le milieu des conduits de ventilation (4).
